(19) Europäisches Patentamt
European Patent Office
Office européen des brevets

(11) EP 3 753 408 A1

(12) **EUROPEAN PATENT APPLICATION**

(43) Date of publication:
**23.12.2020 Bulletin 2020/52**

(51) Int Cl.:
***A01N 37/34*** *(2006.01)* ***A01N 37/38*** *(2006.01)*
***A01N 43/653*** *(2006.01)* ***A01P 3/00*** *(2006.01)*

(21) Application number: **19181663.6**

(22) Date of filing: **21.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Rotam Agrochem International Company Limited**
**Chai Wan (HK)**

(72) Inventor: **Bristow, James Timothy**
**Chai Wan (HK)**

(74) Representative: **Straus, Alexander et al**
**2K Patent- und Rechtsanwälte - München**
**Keltenring 9**
**82041 Oberhaching (DE)**

(54) **A SYNERGISTIC FUNGICIDAL COMPOSITION**

(57) The present invention provides a synergistic fungicidal composition comprising prothioconazole, chlorothalonil and dimethomorph as the active components, and the use of the synergistic fungicidal composition of present invention for controlling undesired fungal infestations. The present invention also provides a method of controlling undesired fungal infestations, which comprises applying the active components prothioconazole, chlorothalonil and dimethomorph of the synergistic fungicidal composition of present invention to the undesired fungal infestations jointly or separately.

EP 3 753 408 A1

## Description

## FIELD

The present invention relates to a synergistic fungicidal composition and a method of preventing, controlling and/or treating fungal infestations in plants and plant parts.

## BACKGROUND

Undesired fungal infection in crop plants causes significant yield reduction. Current agricultural operations rely on the use of fungicides, and a number of crops cannot grow effectively without the use of certain fungicides. Therefore, the control of the undesired fungal infection is crucial to obtain high productivity in crops and is a continual objective in the agricultural field.

The traditional method of enhancing fungicidal activity and broadening fungicidal spectrum of existing fungicides is to mix two or more fungicidally active compounds with different fungicidal activity. When the efficacy of a mixture with two or more active compounds exceeds the anticipated overall efficacy, such as the anticipated overall efficacy calculated by the Colby formula (S.R. Colby, "Calculating Synergistic and Antagonistic Responses of Fungicide Combinations, Weeds 1967, 15, 20-22), the unexpected result is attributed to "synergistic effects"; when the efficacy of a mixture with two or more active compounds is beneath this anticipated overall efficacy of each active compound, the unexpected result is attributed to "antagonistic effects"; when the efficacy of a mixture with two or more active compounds is equal to this anticipated overall efficacy of each active compound, the expected result is attributed to "additive effects". The fungicidal activity of most mixtures is typically, however, lower than that of each active compound applied separately, as a result of the difference in fungicidal efficacy, absorption rate, transmission and metabolism. Only under certain circumstances, the fungicidal mixture exhibits synergistic effects when two or more active compounds with fungicidal activity are mixed together.

It is known that by applying a mixture of some different fungicidally active compounds having specific effects, the activity of the fungicidally active compounds can be enhanced, and as such it is more effective than simply combining them. This activity enhancement, or synergistic effect or synergistic activity, can decrease the application rate of fungicidally active compounds.

Prothioconazole, Chlorothalonil and Dimethomorph are known fungicidally active compounds and are commercially available in fungicidal formulations. It has now surprisingly been found that a mixture comprising of prothioconazole, chlorothalonil and dimethomorph exhibits a synergistic effect in preventing, controlling and/or treating fungal infestations.

Prothioconazole, having the IUPAC name 2-[2-(1-chlorocyclopropyl)-3-(2-chlorophenyl)-2-hydroxypropyl]-2,4-dihydro-1,2,4-triazole-3-thione, has the following structural formula (I):

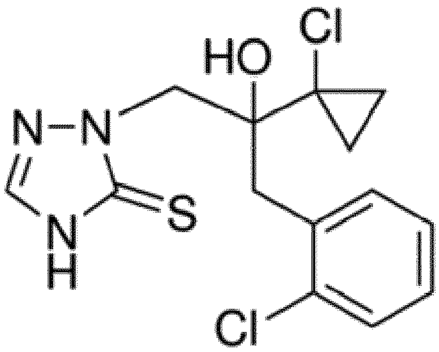

(I).

Prothioconazole is a synthetic compound of the triazole family of compounds, which is a class of systemic fungicides that enter the plant and spread from the site of application to untreated or newly grown area, uprooting existing fungi and/or protecting the plant from future fungal infestations. The mechanism of action of prothioconazole is due to its ability to interfere with the biosynthesis of biosteroids or to inhibit the biosynthesis of ergosterol. Ergosterol is needed by the fungus for membrane structure and function and is essential for the development of functional cell walls. The application of prothioconazole leads to abnormal fungal growth and eventually death.

Chlorothalonil, having the IUPAC name 2,4,5,6-tetrachlorobenzene-1,3-dicarbonitrile, has the following structural formula (II):

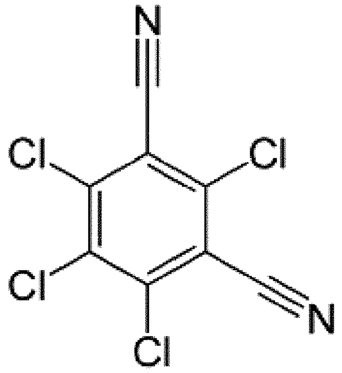

(II).

Chlorothalonil belongs to the chloronitrile fungicide group of compounds, which are used as fungicides, in particular to control a range of fungal diseases including late leaf spot, leaf spot, rust, web blotch, septoria leaf spot, early blight, potato blight, seedling blight, leaf blight, brown spot and downy mildew in a wide range of crops, including, cranberries, strawberries, pawpaws, bananas, mangoes, coconut palms, oil palms, rubber, pepper, vines, hops, cucurbits, tobacco, coffee, tea, rice, soybeans, peanuts, potatoes, sugar beet, cotton, maize, ornamentals, mushrooms, and turf. Chlorothalonil is a non-systemic foliar fungicide acting by the conjugation with and depletion of thiols (particularly glutathione) from germinating fungal cells, leading to disruption of glycolysis and energy production, inducing fungistasis.

Dimethomorph is a commercially available morpholine fungicide and has the chemical name (E,Z)-4-[3-(4-chlorophenyl)-3-(3,4-dimethoxyphenyl)acryloyl]morpholine. It has two isomers with the following structural formulae (III) and (IV):

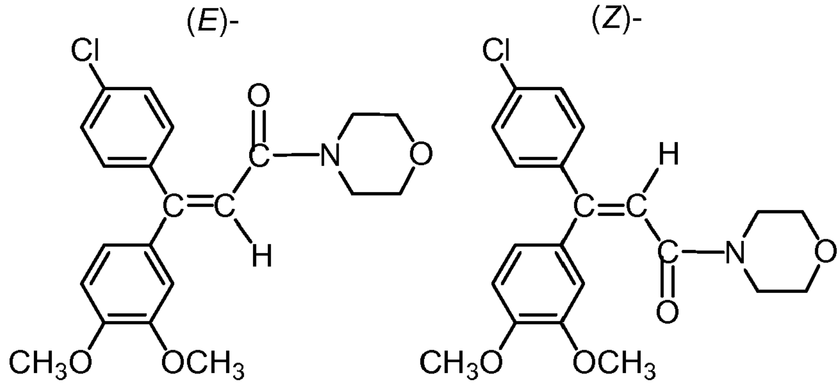

(*E*)- (*Z*)-

(III) (IV).

Dimethomorph is effective against oomycetes, especially *Peronospoaceae* and *Phytophthora spp.* The compound can be applied to crops such as grapes, cucumbers, melons, bitter gourds, tomatoes, peppers, potatoes, cruciferous vegetables to prevent or treat infestations by fungal pathogens. Dimethomorph acts by preventing formation or destroying the cell wall of the fungus being targeted.

**SUMMARY**

In one aspect, the present invention provides a synergistic fungicidal composition, which is not only able to enhance the efficacy against fungal infestations, but also reduce the fungicide application cost and extend the applicable scope. The synergistic fungicidal composition comprises the active components (A) prothioconazole, (B) chlorothalonil and (C) dimethomorph. Components (A), (B) and (C) may be present in the composition and used in the present invention in any weight ratio that provides the aforementioned synergistic effect.

Components (A) and (B) may be present in the composition in a weight ratio that ranges from about 1:50 to about 10:1, preferably from about 1:5 to about 1:25, and more preferably from about 1:10 to about 1:20. Even more preferably from about 1:12 to about 1:16, still more preferably from about 1:13 to about 1:15, with a particularly effective weight ratio being from about 1:14 to about 1:15, especially from about 1:14 to about 1:14.5, in particular about 1:14.1.

Components (A) and (C) may be present in the composition in a weight ratio that ranges from 1:50 to 10:1,

preferably from 1:10 to 1:1, more preferably from 1:5 to 1:1, still more preferably from 1:3 to 1:1, in particular about 1:3.

Components (A), (B) and (C) may be present in the composition in a weight ratio *p:q:r.* where *p* ranges from about 1 to 10 when *q* ranges from 1 to 70 and *r* ranges from 0.2 to 50. More preferably is *p* is 1, and *q* ranges from 5 to 25, and *r* ranges from 0.2 to 15. Still more preferably *is p* is 1, and *q* ranges from 10 to 20, and *r* ranges from 0.5 to 10. A preferred weight ratio *p:q:r* is 1:14.1:3. Some of the particularly preferred weight ratios *p:q:r* of Components (A), (B) and (C) are described in the specific examples set out below.

The synergistic fungicidal composition may comprise active components (A) prothioconazole, (B) chlorothalonil, (C) dimethomorph, surfactant and/or filler.

The active components (A) prothioconazole, (B) chlorothalonil and (C) dimethomorph are present in the said synergistic fungicidal composition in an amount of 5% to 90%, 10% to 80%, or 20% to 75%.

Formulation types suitable for the compositions of the present invention include water-soluble concentrates (SL), emulsifiable concentrates (EC), oil-in-water emulsions (EW), micro-emulsions (ME), suspension concentrates (SC), oil-based suspension concentrates (OD), flowable concentrates (FS), water-dispersible granules (WG), water-soluble granules (SG), wettable powders (WP), water soluble powders (SP), granules (GR), encapsulated granules (CG), fine granules (FG), macro-granules (GG), aqueous suspo-emulsions (SE), capsule suspensions (CS) and micro-granules (MG). Suitably the fungicidal composition is prepared as water-dispersible granules (WG), suspension concentrates (SC), wettable powders (WP) or flowable concentrates (FS).

The combination of components (A) prothioconazole, (B) chlorothalonil and (C) dimethomorph may be used to protect a wide range of plants. In particular, the combination may be used to protect a range of crop plants from fungal infestations.

Crop plants that may be treated using the present invention include: cereals, for example wheat, barley, rye, oat, maize, rice, sorghum, triticale and related crops; beets, for example sugar beet or fodder beet; fruits, for example pome, stone fruit and soft fruit, for example, apple, pear, grape, plum, peach, almond, cherry, and berries, for example, strawberry, raspberry and blackberry; legumes, for example kidney bean, lentil, pea, soybean; oil plants, for example rape, mustard, sunflower; melons, for example chieh-qua, cucumber, cantaloupe; fibrous plants, for example cotton, flax, hemp, and jute; citrus fruits, for example orange, lemon, grapefruit and mandarin orange; vegetables, for example spinach, lettuce, asparagus, cabbage, carrot, onion, tomato, potato, chili; coffee; and ornamental plants, for example flowers, shrubs, broad-leaved trees or evergreen plants, such as conifers.

In the method of preventing, controlling and/or treating undesired fungal infestations, the active components (A) prothioconazole, (B) chlorothalonil and (C) dimethomorph of the synergistic fungicidal composition of the present invention may be applied jointly or separately.

## DETAILED DESCRIPTION

The synergistic efficacy allows reduction of the application rates of a single fungicide, increase of its efficacy at the same application rate, broadening of the fungicide spectrum, control of the varieties having tolerance or resistance to single or several fungicides, prolong the application period and/or reduction of the number of times of single application. It provides the user a system that is more economical and ecological.

The synergistic fungicidal composition in the present invention comprises of active components (A) prothioconazole, (B) chlorothalonil and (C) dimethomorph. Components (A) and (B) may be present in the composition in a weight ratio that ranges from 1:50 to 10:1, preferably from 1:5 to 1:25, and more preferably from 1:10 to 1:20. Even more preferably from 1:12 to 1:16, still more preferably from 1:13 to 1:15, with a particularly effective weight ratio being from 1:14 to 1:15, especially from 1:14 to 1:14.5, in particular 1:14.1; Components (A) and (C) may be present in the composition in a weight ratio that ranges from 1:50 to 10:1, preferably from 1:10 to 1:1, more preferably from 1:5 to 1:1, still more preferably from 1:3 to 1:1, in particular about 1:3.

Components (A), (B) and (C) may be present in the composition in a weight ratio *p:q:r.* where *p* ranges from about 1 to 10 when *q* ranges from 1 to 70 and *r* ranges from 0.2 to 50. More preferably is *p* is 1, and *q* ranges from 5 to 25, and *r* ranges from 0.2 to 15. Still more preferably is *p* is 1, and *q* ranges from 10 to 20, and *r* ranges from 0.5 to 10. A preferred weight ratio *p:q:r* is 1:14.1:3.

Some of the particularly preferred weight ratios *p:q:r* of prothioconazole, chlorothalonil and dimethomorph are described in the specific examples set out below.

The synergistic fungicidal composition of present invention is able to synergize the activity of active components (A) prothioconazole, (B) chlorothalonil and (C) dimethomorph in an unprecedented manner, which exceeds the combined activities when each active component, (A) prothioconazole, (B) chlorothalonil and (C) dimethomorph, is applied separately.

The present invention also provides synergistic fungicidal compositions, comprising active components (A) prothioconazole, (B) chlorothalonil and (C) dimethomorph, and auxiliaries.

The auxiliaries employed in the composition will depend upon the type of formulation and/or the manner in

which the formulation is to be applied by the user. Formulations incorporating the composition of the present invention are described hereinafter. Suitable auxiliaries which may be comprised in the composition according to the invention are all customary formulation adjuvants or components, such as extenders, carriers, solvents, surfactants, stabilizers, anti-foaming agents, anti-freezing agents, preservatives, antioxidants, colorants, thickeners, solid adherents and inert fillers. Such auxiliaries are known in the art and are commercially available. Their use in the formulation of the compositions of the present invention will be apparent to the person skilled in the art.

The fungicidal composition may comprise one or more inert fillers. Such inert fillers are known in the art and available commercially. Suitable fillers include, for example, natural ground minerals, such as kaolins, aluminas, talc, chalk, quartz, attapulgite, montmorillonite, and diatomaceous earth, or synthetic ground minerals, such as highly dispersed silicic acid, aluminum oxide, silicates, and calcium phosphates and calcium hydrogen phosphates. Suitable inert fillers for granules include, for example, crushed and fractionated natural minerals, such as calcite, marble, pumice, sepiolite, and dolomite, or synthetic granules of inorganic and organic ground materials, as well as granules of organic material, such as sawdust, coconut husks, corn cobs, and tobacco stalks.

The fungicidal compositions of the present invention optionally include one or more surfactants, which are preferably non-ionic, cationic and/or anionic in nature, and surfactant mixtures which have good emulsifying, dispersing and wetting properties, depending on the nature of the fungicidally active compounds to be formulated. Suitable surfactants are known in the art and are commercially available.

The surfactant can be an emulsifier, dispersant or wetting agent of ionic or nonionic type. Examples are salts of polyacrylic acids, salts of lignosulphonic acid, salts of phenylsulphonic or naphthalenesulphonic acids, polycondensates of ethylene oxide with fatty alcohols or with fatty acids or with fatty amines, substituted phenols, especially alkylphenols, sulphosuccinic ester salts, taurine derivatives, especially alkyltaurates, or phosphoric esters of polyethoxylated phenols or alcohols. The presence of at least one surfactant is generally required when the active compound and/or the inert carrier and/or auxiliary/adjuvant are insoluble in water and the vehicle for the final application of the composition is water.

Some other examples of suitable surfactants are polyoxyethylated (POE) sorbitan esters, such as POE (20), sorbitan trioleate and polyoxyethylated (POE) sorbitol esters, such as POE (40), sorbitol hexaoleate. POE (20) sorbitan trioleate is commercially available under the tradenames ATLAS™ G-1086 and CIRRASOL™ G-1086. Further examples of suitable surfactants are the alkali metal salts of alkylnaphthalene sulfonates, with sodium alkyl naphthalene sulfonate-formaldehyde condensate, such as MORWET® EFW, being particularly suitable for compositions of the present invention. The surfactant may also include condensates of alkali metal alkylnaphthalenesulfonates with aldehydes, such as MORWET® D-425. Combinations of a POE sorbitan ester with a POE sorbitol ester allow the hydrophilic-lipophilic balance (HLB) value of the surfactant to be optimized, so as to obtain the highest quality emulsion (smallest suspended droplets) when the composition is added to water. High quality of emulsions typically leads to optimal fungicidal performance.

Suitable anionic surfactants can be both so-called water-soluble soaps and water-soluble synthetic surface-active compounds. Soaps which may be used in the composition are the alkali metal, alkaline earth metal or substituted or unsubstituted ammonium salts of higher fatty acid (C10 to C22), for example the sodium or potassium salt of oleic or stearic acid, or of natural fatty acid mixtures.

The amount of surfactant present in the composition will depend upon factors such as the type of formulation employed.

The fungicidal compositions of the present invention optionally further comprise one or more polymeric stabilizers. The suitable polymeric stabilizers that may be used in the present invention include, but are not limited to, polypropylene, polyisobutylene, polyisoprene, copolymers of mono-olefins and diolefins, polyacrylates, polystyrene, polyvinyl acetate, polyurethanes or polyamides. Suitable stabilizers are known in the art and commercially available.

The surfactants and polymeric stabilizers mentioned above are generally believed to impart stability to the composition, in turn allowing the composition to be formulated, stored, transported and applied.

Suitable anti-foaming agents include all substances which can normally be used for this purpose in agrochemical compositions. Suitable anti-foaming agents are known in the art and are available commercially. Particularly preferred anti-foaming agents are mixtures of polydimethylsiloxanes and perfluroalkylphosphonic acids, such as the silicone anti-foaming agents available from GE or Compton.

Suitable organic solvents that may be used in the compositions may be selected from all customary organic solvents, which thoroughly dissolve one or more of the active compounds employed. Again, suitable organic solvents for the active compounds in the compositions of the present invention are known in the art. The following may be mentioned as being preferred: N-methyl pyrrolidone, N-octyl pyrrolidone, cyclohexyl-1-pyrrolidone; or a mixture of paraffinic, isoparaffinic, cycloparaffinic and aromatic hydrocarbons, such as SOLVESSO™ 200. Suitable solvents are commercially available.

Suitable preservatives include all substances which can normally be used for this purpose in agrochemical compositions of this type and again are well known in the art. Suitable preservatives that may be mentioned include tolylfluanid, such as PREVENTOL®, and benzisothiazolinone, such as PROXEL®.

Suitable antioxidants are all substances which can normally be used for this purpose in agrochemical compositions, as is known in the art. Preference is given to butylated hydroxytoluene.

Suitable thickeners include all substances which can normally be used for this purpose in agrochemical compositions. Suitable thickeners include, for example xanthan gum, PVOH, cellulose and its derivatives, clay hydrated silicates, magnesium aluminum silicates or a mixture thereof. Again, such thickeners are known in the art and available commercially.

The fungicidal composition of the present invention may further comprise one or more solid adherents. Such adherents are known in the art and are available commercially. They include organic adhesives, including tackifiers, such as celluloses or substituted celluloses, natural and synthetic polymers in the form of powders, granules, or lattices, and inorganic adhesives, such as gypsum, silica, or cement.

In addition, depending upon the formulation, the composition according to the invention may also comprise water.

The active components (A) prothioconazole, (B) chlorothalonil and (C) dimethomorph are present in aforesaid synergistic fungicidal composition in an amount of from about 5% to about 90%, preferably from about 10% to about 80%, more preferably from about 20% to about 75%.

Component (A) prothioconazole may be present in the composition in an amount of at least about 0.5% by weight, preferably from about 1% by weight, up to about 70% by weight, preferably up to about 65%, more preferably up to about 60%, still more preferably up to about 55%, especially up to about 50% by weight. The composition may comprise component (A) prothioconazole in an amount of from about 0.5% to about 60% by weight, preferably from about 1% to about 50% by weight, still more preferably from about 1% to about 40%, about 1% to about 30%, about 1% to about 20%, about 1% to about 15%, about 1% to about 10%, about 1% to about 5% by weight.

Component (B) chlorothalonil may be present in the composition in an amount of at least about 0.5% by weight, preferably from about 1% by weight, more preferably from about 2%, up to about 70% by weight, preferably up to about 65%, more preferably up to about 60%, still more preferably up to about 55%, especially up to about 50% by weight. The composition may comprise component (B) chlorothalonil in an amount of from about 0.5% to about 70% by weight, preferably from about 10% to about 70%, more preferably from about 15% to about 70% by weight, still more preferably from about 20% to about 70%, about 25% to about 70%, about 30% to about 70% by weight.

Component (C) dimethomorph may be present in the composition in an amount of at least about 0.5% by weight, preferably from about 1% by weight, more preferably from about 2%, up to about 70% by weight, preferably up to about 60%, more preferably up to about 50%, especially up to about 40% by weight. The composition may comprise component (C) dimethomorph in an amount of from about 0.5% to about 40% by weight, preferably from about 1% to about 30%, more preferably from about 1% to about 20% by weight.

Formulation types suitable for the compositions of the present invention include water-soluble concentrates (SL), emulsifiable concentrates (EC), emulsions (EW), micro-emulsions (ME), suspension concentrates (SC), oil-based suspension concentrates (OD), flowable suspensions (FS), water-dispersible granules (WG), water-soluble granules (SG), water-dispersible powders (WP), water soluble powders (SP), granules (GR), encapsulated granules (CG), fine granules (FG), macrogranules (GG), aqueous suspo-emulsions (SE), capsule suspensions (CS) and microgranules (MG). The following paragraphs will describe the exemplary formulations of the fungicidal composition including water-dispersible granules (WG) suspension concentrates (SC), water-dispersible powders (WP) and flowable suspensions (FS).

The composition, method and use of the present invention may be used to prevent, control and/or treat fungal infestations in a range of plants.

The composition according to the invention is suitable for a wide range of plants. Crop plants that may be treated using the present invention include: cereals, for example wheat, barley, rye, oat, maize, rice, sorghum, triticale and related crops; beets, for example sugar beet or fodder beet; fruits, for example pome, stone fruit and soft fruit, for example, apple, pear, grape, plum, peach, almond, cherry, and berries, for example, strawberry, raspberry and blackberry; legumes, for example kidney bean, lentil, pea, soybean; oil plants, for example rape, mustard, sunflower; melons, for example chieh-qua, cucumber, cantaloupe; fibrous plants, for example cotton, flax, hemp, and jute; citrus fruits, for example orange, lemon, grapefruit and mandarin orange; vegetables, for example spinach, lettuce, asparagus, cabbage, carrot, onion, tomato, potato, chili; coffee; and ornamental plants, for example flowers, shrubs, broad-leaved trees or evergreen plants, such as conifers.

The present invention is particularly suitable for the treatment and protection of cereals, fruits, legumes, oil plants, melons and vegetables, particularly maize, barley, grape, pea, soybean, rape, melon and potato.

The composition, method and use of the present invention may be used to prevent, control and/or treat infestations caused by a range of fungal pathogens. The fungal pathogen species include, but are not limited to: *Alternaria* spp., *Ascochyta* spp., *Aureobasidium* spp., *Bipolaris* spp., *Black* spp., *Blumeria* spp., *Botrytis* spp., *Bremia* spp., *Cercospora* spp., *Cercosporidium* spp., *Cladosporium* spp., *Cochilobolus* spp., *Colletotrichum* spp., *Corynespora* spp., *Diaporthe* spp., *Didymella* spp., *Erysiphe* spp., *Exserohikum* spp., *Helminthosporium* spp., *Kabatiella* spp., *Leptosphaeria* spp., *Leptosphaerulina* spp., *Marssonina* spp., *Mycosphaerella* spp., *Peronospora* spp., *Phaeosphaeria* spp., *Phakop-*

*sora* spp., *Phoma* spp., *Phyllosticta* spp., *Physoderma* spp., *Phytophthora* spp., *Plasmopara* spp., *Pseudoperonospora* spp., *Pseudopezizza* spp., *Puccinia* spp., *Pyrenophora* spp., *Rhizoctonia* spp., *Rhynchosporium* spp., *Sclerotinia* spp., *Septoria* spp., *Septosphaeria* spp., *Stagonospora* spp., *Uncinula* spp., *and Uromyces* spp.

The present invention is particularly effective in the prevention or treatment of infestations by *Alternaria* spp., *Ascochyta* spp., *Cercospora* spp., *Cochilobolus* spp., *Colletotrichum* spp., *Didymella* spp., *Erysiphe* spp., *Mycosphaerella* spp., *Peronospora* spp., *Phakopsora* spp., *Phytophthora* spp., *Rhizoctonia* spp., *Sclerotinia* spp., *and Septoria* spp.

Fungal pathogens that may be prevented, controlled and/or treated using the present invention are, for example, *Alternaria cucumerina* (blight), *Alternaria dauci* (leaf spot), *Alternaria porri* (purple leaf spot), *Alternaria solani* (early blight), *Alternaria* spp. (blight), *Alternaria* spp. (leaf spot), *Alternaria* spp. (ear disease), *Alternaria* spp. (blight, leaf spot), *Alternaria* spp. (leaf spot and pod spot), *Ascochyta* spp. (blight), *Ascochyta* spp. (blight, leaf spot), *Aureobasidium zeae* (eye spot), *Bipolaris maydis* (maize Southern leaf blight), black spot germ *(Alternaria* blight), *Blumeria graminis, Botrytis cinerea (Botrytis cinerea* gray mold), *Botrytis cinerea* (gray mold), *Botrytis cinerea* (gray rot), *Botrytis* spp. (gray rot), *Bremia lactucae* (downy mildew), *Cercospora arachidicola* (early leaf spot), *Cercospora (*blight and leaf spot), *Cercospora kikuchii* (*Cercospora* blight and leaf spot, purple leaf spot), *Cercospora sojina* (frogeye, leaf spot), *Cercospora sorghi* (gray leaf spot), *Cercospora (Cercospora* leaf *spot*), *Cercospora zeae-maydis* (gray leaf spot), *Cercosporidium personatum* (late leaf spot), *Cladosporium* (ear disease), *Cochliobolus sativus* (spot blight), *Cochliobolus heterostrophus* (maize Southern leaf blight), *Colletotrichum graminicola* (anthrax), *Colletotrichum graminicola* (anthrax, leaf blight and stalk rot), *Colletotrichum* spp. (anthrax), *Colletotrichum truncatum* (anthrax), *Corynespora cassiicola* (target spot), *Diaporthe phaseolum* (pod and stalk blight), *Didymella bryoniae* (stem blight), *Erysiphe graminis* (powdery mildew), *Erysiphe* spp. (powdery mildew), *Exserohikum turcicum* (maize leaf blight), *Leptosphaerulina briosiani* (leaf spot), *Helminthosporium* (black leaf spot), *Kabatiella zeae* (eye spot), *Leptosphaeria nodorum* (glume blight), *Marssonina panattoniana* (anthrax), *Mycosphaerella graminicola, Mycosphaerella* spp. (*Mycosphaerella* blight), *Peronospora arborescens* (downy mildew), *Peronospora destructor* (downy mildew), *Peronospora manshurica* (downy mildew), *Phaeosphaeria nodorum, Phakopsora* spp., *Phakospora* spp. (rust fungi), *Phoma, Phoma arachidicola* (net blotch), *Phoma exigua* (*Ascochyta* blight), *Phoma exigua* (basal stem rot), *Phoma medicaginis* (spring black stem and leaf spot), *Phyllosticta maydis* (yellow leaf blight), *Physoderma maydis* (brown leaf spot), *Phytophthora infestans* (late blight), *Phytophthora nicotianae* (downy mildew), *Plasmopara viticola* (downy mildew), *Pseudoperonospora cubensis* (downy mildew), *Pseudopezizza medicaginis* (common leaf spot), *Puccinia coronata* (crown rust), *Puccinia hordei* (brown rust), *Puccinia polyspora* (rust), *Puccinia sorghi* (rust), *Puccinia striiformis* (yellow rust), *Puccinia triticina* (leaf rust), *Pyrenophora teres* (net blotch), *Pyrenophora tritici-repenti* (brown leaf spot), *Rhizoctonia solani* (aerial web blight), *Rhizoctonia solani (Rhizoctonia* aerial blight), *Rhynchosporium, Sclerotinia, Sclerotinia minor* (lettuce blight), *Sclerotinia minor* (*Sclerotinia* blight), *Sclerotinia sclerotiorum* (*Sclerotinia* stalk rot), *Sclerotinia sclerotiorum* (white mold), *Sclerotinia sclerotiorum* (*Sclerotinia* white mold), *Sclerotinia* (*Sclerotinia* rot, white mold), *Sclerotinia* (*Sclerotinia* rot and blight), *Septoria glycines* (brown leaf spot), *Septoria* spp. (*Septoria* rot), *Septoria* spp. (*Septoria* leaf spot), *Septoria* spp. (leaf spot and glume spot), *Septoria* spp. (*Septoria* spot), *Septoria tritici* (leaf spot), *Septosphaeria turcica* (Northern maize leaf blight), *Stagonospora* spp. (leaf spot and glume spot), *Uncinula necator* (powdery mildew), *Uromyces* spp. (rust).

The present invention is particularly effective in the prevention, treatment and/or control of fungal infestations caused by *Alternaria* spp., *Ascochyta* spp., *Botrytis cinerea, Cercospora arachidicola, Cercospora sojina, Cercospora zeae-maydis, Cochliobolus sativus, Colletotrichum* spp., *Erysiphe* spp., *Peronospora arborescens, Phakospora* spp., *Phytophthora infestans, Plasmopara viticola, Rhizoctonia solani, Sclerotinia sclerotiorum, Septoria tritici,* and *Uncinula necator.*

The present invention is advantageous when used to prevent, control and/or treat plants suffering from a range of fungal diseases, in particular gray mold, downy mildew, late blight, early blight, powdery mildew, gray leaf spot, leaf blight, leaf rust, glume blight, brown leaf spot, net blotch, stalk rot and other rot diseases.

The synergistic fungicidal composition of present invention can be applied through traditional skills known in the art. The suitable skills include spraying, atomizing, dusting, broadcast sawing or irrigation. The method of application can be determined by purpose; the skill should make sure the active components of present invention can achieve optimum distribution under any circumstances.

The present invention provides a method of controlling undesired fungal infestations, comprising applying the active compounds of synergistic fungicidal composition of present invention, namely prothioconazole, chlorothalonil and dimethomorph jointly or separately to the undesired fungal infestations.

The synergistic fungicidal composition of present invention comprises an effective amount of active components, namely (A) prothioconazole, (B) chlorothalonil and (C) dimethomorph which has synergistic effects. The synergism can be observed when the active components (A) prothioconazole, (B) chlorothalonil and (C) dimethomorph are applied jointly (for example used as combined formulation or tank mixture); the synergism can also be observed when the active compounds are applied at different times (separate applications). It is preferred to apply aforesaid active components, namely (A) prothioconazole, (B) chlorothalonil and (C) dimethomorph, jointly or almost simultaneously and particularly preferred to apply jointly. A possible use of present invention is to apply said active components jointly in the form a

tank-mixture, wherein the concentrate of optimally formulated active compounds is mixed with water in the tank and then apply the obtained spray solution. In one preferred embodiment, the fungicidal components are applied directly on the foliage (or leaves) of a plant.

There is synergistic effect when active components, namely (A) prothioconazole, (B) chlorothalonil and (C) dimethomorph are applied, that is, the activity of said synergistic fungicidal composition is higher than the anticipated activity calculated, based on the Colby formula for the fungicide composition. Synergism is able to reduce the application rate, control harmful fungi with wider spectrum, take effects more quickly, has longer effective duration and can better control the undesired fungal infestations and expand the application period by only one or several times of application to the undesired fungal infestations. The synergistic fungicidal composition of present invention is able to reduce the application rate of active components significantly.

In general, the application rate of the fungicidal composition depends on the active compounds in the combination, type of crop plants, soil type, season, climate, soil ecology and various other factors. The application rate of the composition for a given set of conditions can readily be determined by trials.

The application rate of the total amount of components (A) prothioconazole, (B) chlorothalonil and (C) dimethomorph may be in the range of from 120 to 5000 grams of active compounds per hectare (g/ha), preferably from 200 to 2500 g/ha, more preferably from 330 to 2300 g/ha.

The application rate of component (A) prothioconazole is in the range of from 10 to 300 g/ha, preferably from 15 to 250 g/ha, more preferably from 20 to 200 g/ha, even more preferably from 40 to 120 g/ha. Specific examples of application rates for prothioconazole are 35 g/ha, 47 g/ha, 51.5 g/ha, 75 g/ha and 103 g/ha.

The application rate of component (B) chlorothalonil is in the range of from 100 to 2500 g/ha, preferably from 200 to 2000 g/ha, more preferably from 300 to 1800 g/ha, even more preferably from 500 to 1500 g/ha. Examples of specific application rates for chlorothalonil are 494 g/ha, 500 g/ha, 663 g/ha, 1030 g/ha, 1200 g/ha, 1236 g/ha and 1440 g/ha.

The application rate of the total amount of component (A) prothioconazole and component (B) chlorothalonil may be in the range of from 10 to 3000 g/ha, preferably from 50 to 2000 g/ha, more preferably from 100 to 2000 g/ha.

The application rate of component (C) dimethomorph can vary in a wide range, such as within 1-2000 g/ha, preferably 5-1500 g/ha, more preferably 10-800 g/ha. Examples of specific application rates for dimethomorph are 51.5 g/ha, 75 g/ha, 103 g/ha, 132.6 g/ha, 175 g/ha and 350 g/ha.

The application rate of the total amount of component (B) chlorothalonil and component (C) dimethomorph may be in the range of 1-2500 g/ha, preferably from 5-2000 g/ha, more preferably from 100 to 2000 g/ha.

Some of the particularly preferred application rates are described in the specific examples set out below.

**Formulation Examples**

Water dispersible granules (WG)

Water dispersible granule (WG) formulations were prepared as follows: the active compounds, prothioconazole, chlorothalonil and dimethomorph, and adjuvants, 2% w/w of MORWET® EFW powder (sodium alkylnaphthalene sulfonate), 5% w/w of MORWET® D-425 powder (sodium alkylnaphthalenesulfonate-formaldehyde condensate), 1% w/w of AGNIQUE® L soap (fatty acids, tallow, sodium salts) and mannitol (balance to 100%), were mixed according to the proportions in the following formulation recipe. Then the wettable powder was prepared by jet milling the obtained mixture; some water was then added to the extrude paste which was dried and sieved in the end.

The composition of an exemplary water dispersible granule formulation is summarized as follows:

Water-dispersible granule (WG) of 2% Prothioconazole + 28.2% Chlorothalonil + 2% Dimethomorph

| | |
|---|---|
| Prothioconazole | 2% |
| Chlorothalonil | 28.2% |
| Dimethomorph | 2% |
| MORWET® EFW powder | 2% |
| MORWET® D-425 powder | 5% |
| AGNIQUE® L soap | 1% |
| Mannitol | Balance to 100% |

Aqueous suspension concentrate (SC)

Aqueous suspension concentrates (SC) formulations were prepared as follows: The finely ground active compounds were mixed with the adjuvants (8% propylene glycol, 0.5% SAG 1529 (modified polydimethylsiloxane), 3% MORWET® D-425 powder, 2% ATLAS™ G-5000 (polyalkylene glycol ether), 0.2% AG-RHO™ POL 23/W (xanthan gum), 0.1% NIPACIDE® BIT 20 (1,2-Benzisothiazol-3-one) and water (to balance the formulation to 100%).

The composition of an exemplary aqueous suspension concentrate formulation is summarized as follows: Suspension concentrate (SC) of 2% Prothioconazole + 28.2% Chlorothalonil + 2% Dimethomorph

| | |
|---|---|
| Prothioconazole | 2% |
| Chlorothalonil | 28.2% |
| Dimethomorph | 2% |
| Propylene glycol | 8% |
| SAG 1529 (modified polydimethylsiloxane) | 0.5% |
| MORWET® D-425 powder | 3% |
| ATLAS™ G-5000 (polyalkylene glycol ether) | 2% |
| AG-RHO™ POL 23/W (xanthan gum) | 0.2% |
| NIPACIDE® BIT 20 (1,2-Benzisothiazol-3-one) | 0.1% |
| Water | Balance to 100% |

WG and SC with different amount of actives were prepared. The percentage weight of the actives are summarized in the following table:

| Example | Formulation Type | prothioconazole (%) | chlorothalonil (%) | dimethomorph (%) |
|---|---|---|---|---|
| 1 | SC | 36 | 0 | 0 |
| 2 | SC | 0 | 28.2 | 0 |
| 3 | SC | 0 | 0 | 40 |
| 4 | SC | 2 | 28.2 | 0 |
| 5 | SC | 15 | 0 | 15 |
| 6 | SC | 0 | 28.2 | 2 |
| 7 | SC | 2 | 20 | 0 |
| 8 | SC | 0 | 20 | 2 |
| 9 | SC | 5 | 0 | 25 |
| 10 | SC | 0 | 35.3 | 12.5 |
| 11 | SC | 2 | 40 | 0 |
| 12 | SC | 0 | 40 | 2 |
| 13 | SC | 2 | 28.2 | 2 |
| 14 | SC | 2.5 | 35.3 | 12.5 |
| 15 | SC | 2 | 20 | 2 |
| 16 | SC | 2 | 40 | 2 |
| 17 | WG | 36 | 0 | 0 |
| 18 | WG | 0 | 28.2 | 0 |
| 19 | WG | 0 | 0 | 40 |
| 20 | WG | 2 | 24 | 0 |
| 21 | WG | 15 | 0 | 15 |
| 22 | WG | 0 | 24 | 2 |
| 23 | WG | 2 | 32 | 0 |
| 24 | WG | 0 | 32 | 2 |

(continued)

| Example | Formulation Type | prothioconazole (%) | chlorothalonil (%) | dimethomorph (%) |
|---|---|---|---|---|
| 25 | WG | 2 | 28.2 | 0 |
| 26 | WG | 2 | 0 | 20 |
| 27 | WG | 0 | 28.2 | 20 |
| 28 | WG | 10 | 0 | 28 |
| 29 | WG | 3 | 42.3 | 0 |
| 30 | WG | 0 | 40 | 8 |
| 31 | WG | 2 | 24 | 2 |
| 32 | WG | 2 | 32 | 2 |
| 33 | WG | 2 | 28.2 | 20 |
| 34 | WG | 2.8 | 40 | 8 |

**Biology Tests**

The efficacy of a combination of three fungicidally active compounds can be calculated through the "Colby formula" as follows (S.R. Colby, "Calculating Synergistic and Antagonistic Responses of Fungicide Combinations, Weeds 1967, 15, 20-22), where
X is the efficacy of Compound A used at a dose of *m* gram/hectare (g/ha) (%);
Y is the efficacy of Compound B used at a dose of *n* gram/hectare (g/ha) (%);
Z is the efficacy of Compound C used at a dose of *p* gram/hectare (g/ha) (%);
$E_0$ is the expected activity of the given combination when Compounds A, B and C are used jointly at dosages of *m* gram/hectare (g/ha), *n* gram/hectare (g/ha) and *p* gram/hectare (g/ha) respectively (%).

$$E_0 = (X+Y+Z) - (X\times Y+X\times Z+Y\times Z)/100 + X\times Y\times Z/10000$$

if the observed actual activity E is greater than the anticipated activity $E_0$, then the composition has synergistic effect.
In our biological tests if the observed actual efficiency E is greater than the anticipated value $E_0$ as calculated via the Colby's equation, then it means that the efficacy of fungicidal composition is greater than the efficacy from its 'additive effect', and that the composition demonstrates synergistic effect.
Tests has been conducted for the synergistic fungicidal composition in present invention with the following plants: maize, barley, grape, pea, soybean, rape, melon and potato.

**Test 1: Maize - *Cercospora zeae-maydis* (gray leaf spot)**

Young maize plants were sprayed with a conidium suspension of *Cercospora zeae-maydis* and cultivated at 20°C and 100% relative atmospheric humidity for 48 hours.
The plants were divided into groups and formulations of Examples 1 to 6 and 13 were used to treat the infected plants. One group of plants was kept untreated as a control group.
The treated plants were held at 15°C and 80% relative atmospheric humidity in a greenhouse for 15 days. Thereafter, the fungicidal efficacy was evaluated.
The results of the evaluation are set out in Table 1 below. 100% indicates that no fungal infestation is observed and 0% is equivalent to the efficacy of the control group.

**Table 1**

| Example No. | Application rate of prothioconazole (g/ha) | Application rate of chlorothalonil (g/ha) | Application rate of dimethomorph (g/ha) | Efficacy (%) |
|---|---|---|---|---|
| Untreated | 0 | 0 | 0 | 0 |
| 1 | 103 | 0 | 0 | 20 |

(continued)

| Example No. | Application rate of prothioconazole (g/ha) | Application rate of chlorothalonil (g/ha) | Application rate of dimethomorph (g/ha) | Efficacy (%) |
|---|---|---|---|---|
| 2 | 0 | 1440 | 0 | 50 |
| 3 | 0 | 0 | 103 | 15 |
| 4 | 103 | 1440 | 0 | 70 |
| 6 | 0 | 1440 | 103 | 65 |
| 5 | 103 | 0 | 103 | 35 |
| 13 | 103 | 1440 | 103 | 90 |

The results set out in Table 1 demonstrate that the combination of prothioconazole, chlorothalonil and dimethomorph exhibited a synergistic level of activity in the control of an infestation of maize by *Cercospora zeae-maydis.*

**Test 2: Barley - *Cochliobolus sativus* (spot blight)**

Young barley plants were sprayed with a conidium suspension of *Cochliobolus sativus* and cultivated at 20°C and 100% relative atmospheric humidity for 48 hours.
The plants were divided into groups and formulations of Examples 1 to 3, 5, 7 to 8 and 15 were used to treat the infected plants. One group of plants was kept untreated as a control group.
The treated plants were held at 15°C and 80% relative atmospheric humidity in a greenhouse for 15 days. Thereafter, the fungicidal efficacy was evaluated.
The results of the evaluation are set out in Table 2 below. 100% indicates that no fungal infestation is observed and 0% is equivalent to the efficacy of the control group.

**Table 2**

| Example No. | Application rate of prothioconazole (g/ha) | Application rate of chlorothalonil (g/ha) | Application rate of dimethomorph (g/ha) | Efficacy (%) |
|---|---|---|---|---|
| Untreated | 0 | 0 | 0 | 0 |
| 1 | 103 | 0 | 0 | 30 |
| 2 | 0 | 1030 | 0 | 50 |
| 3 | 0 | 0 | 103 | 10 |
| 7 | 103 | 1030 | 0 | 80 |
| 8 | 0 | 1030 | 103 | 60 |
| 5 | 103 | 0 | 103 | 40 |
| 15 | 103 | 1030 | 103 | 95 |

The results set out in Table 2 demonstrate that the combination of prothioconazole, chlorothalonil and dimethomorph and exhibited a synergistic level of activity in the control of an infestation of barley by *Cochliobolus sativus.*

**Test 3: Grape - *Plasmopara viticola* (downy mildew)**

Young grape plants were sprayed with conidium suspensions of *Plasmopara viticola,* and cultivated at 20°C and 100% relative atmospheric humidity for 48 hours.
The plants were divided into groups and formulations of Examples 1 to 4, 9 to 10 and 14 were used to treat the infected plants. One group of plants was kept untreated as a control group.
The treated plants were held at 15°C and 80% relative atmospheric humidity in a greenhouse for 15 days. Thereafter, the fungicidal efficacy was evaluated.
The results of the evaluation are set out in Table 3 below. 100% indicates that no fungal infestation is observed and 0% is equivalent to the efficacy of the control group.

**Table 3**

| Example No. | Application rate of prothioconazole (g/ha) | Application rate of chlorothalonil (g/ha) | Application rate of dimethomorph (g/ha) | Efficacy (%) |
|---|---|---|---|---|
| Untreated | 0 | 0 | 0 | 0 |
| 1 | 35 | 0 | 0 | 30 |
| 2 | 0 | 494 | 0 | 45 |
| 3 | 0 | 0 | 175 | 10 |
| 4 | 35 | 494 | 0 | 70 |
| 10 | 0 | 494 | 175 | 55 |
| 9 | 35 | 0 | 175 | 40 |
| 14 | 35 | 494 | 175 | 95 |

The results set out in Table 3 demonstrate that the combination of prothioconazole, chlorothalonil and dimethomorph and exhibited a synergistic level of activity in the control of an infestation of grape by *Plasmopara viticola,.*

**Test 4: Pea - *Sclerotinia sclerotiorum***

Young pea plants were sprayed with conidium suspension of *Sclerotinia sclerotiorum* and cultivated at 20°C and 100% relative atmospheric humidity for 48 hours.

The plants were divided into groups and formulations of Examples 1 to 3, 5, 11 to 12 and 16 were used to treat the infected plants. One group of plants was kept untreated as a control group.

The treated plants were held at 15°C and 80% relative atmospheric humidity in a greenhouse for 15 days. Thereafter, the fungicidal efficacy was evaluated.

The results of the evaluation are set out in Table 4 below. 100% indicates that no fungal infestation is observed and 0% is equivalent to the efficacy of the control group.

**Table 4**

| Example No. | Application rate of prothioconazole (g/ha) | Application rate of chlorothalonil (g/ha) | Application rate of dimethomorph (g/ha) | Efficacy (%) |
|---|---|---|---|---|
| Untreated | 0 | 0 | 0 | 0 |
| 1 | 51.5 | 0 | 0 | 30 |
| 2 | 0 | 1030 | 0 | 50 |
| 3 | 0 | 0 | 51.5 | 10 |
| 11 | 51.5 | 1030 | 0 | 80 |
| 12 | 0 | 1030 | 51.5 | 60 |
| 5 | 51.5 | 0 | 51.5 | 40 |
| 16 | 51.5 | 1030 | 51.5 | 95 |

The results set out in Table 4 demonstrate that the combination of prothioconazole, chlorothalonil and dimethomorph exhibited a synergistic level of activity in the control of an infestation of pea by *Sclerotinia sclerotiorum.*

**Test 5: Soybean - *Cercospora sojina, Phakospora spp.* and *Rhizoctonia solani***

Young soybean plants were sprayed with conidium suspensions of *Cercospora sojina, Phakospora spp.* and *Rhizoctonia solani* separately, and cultivated at 20°C and 100% relative atmospheric humidity for 48 hours.

The plants were divided into groups and formulations of Examples 17 to 22 and 31 were used to treat the infected plants. One group of plants was kept untreated as a control group.

The treated plants were held at 15°C and 80% relative atmospheric humidity in a greenhouse for 15 days.

Thereafter, the fungicidal efficacy was evaluated.

The results of the evaluation are set out in Table 5 below. 100% indicates that no fungal infestation is observed and 0% is equivalent to the efficacy of the control group. In Table 5 A1 represents active compound 1 (prothioconazole), A2 represents active compound 2 (chlorothalonil), A3 represents active compound 3 (dimethomorph), T1 represents target 1 (*Cercospora sojina*), T2 represents target 2 (*Phakospora spp*.), and T3 represents target 3 *(Rhizoctonia solani).*

**Table 5**

| Example No. | Application rate of A1 (g/ha) | Application rate of A2 (g/ha) | Application rate of A3 (g/ha) | Efficacy against T1 (%) | Efficacy against T2 (%) | Efficacy against T3 (%) |
|---|---|---|---|---|---|---|
| Untreated | 0 | 0 | 0 | 0 | 0 | 0 |
| 17 | 103 | 0 | 0 | 15 | 10 | 10 |
| 18 | 0 | 1236 | 0 | 30 | 25 | 20 |
| 19 | 0 | 0 | 103 | 10 | 5 | 5 |
| 20 | 103 | 1236 | 0 | 45 | 35 | 30 |
| 22 | 0 | 1236 | 103 | 40 | 30 | 25 |
| 21 | 103 | 0 | 103 | 25 | 15 | 15 |
| 31 | 103 | 1236 | 103 | 85 | 75 | 60 |

The results set out in Table 5 demonstrate that the combination of prothioconazole, chlorothalonil and dimethomorph exhibited a synergistic level of activity in the control of an infestation of soybean plants by *Cercospora sojina, Phakospora spp.* and *Rhizoctonia solani.*

**Test 6: Rape - *Peronospora arborescens* (downy mildew)**

Young rape plants were sprayed with a conidium suspension of *Peronospora arborescens* and cultivated at 20°C and 100% relative atmospheric humidity for 48 hours.

The plants were divided into groups and formulations of Examples 17 to 19, 21, 23 to 24 and 32 were used to treat the infected plants. One group of plants was kept untreated as a control group.

The treated plants were held at 15°C and 80% relative atmospheric humidity in a greenhouse for 15 days. Thereafter, the fungicidal efficacy was evaluated.

The results of the evaluation are set out in Table 6 below. 100% indicates that no fungal infestation is observed and 0% is equivalent to the efficacy of the control group.

**Table 6**

| Example No. | Application rate of prothioconazole (g/ha) | Application rate of chlorothalonil (g/ha) | Application rate of dimethomorph (g/ha) | Efficacy (%) |
|---|---|---|---|---|
| Untreated | 0 | 0 | 0 | 0 |
| 17 | 75 | 0 | 0 | 15 |
| 18 | 0 | 1200 | 0 | 35 |
| 19 | 0 | 0 | 75 | 70 |
| 23 | 75 | 1200 | 0 | 55 |
| 24 | 0 | 1200 | 75 | 85 |
| 21 | 75 | 0 | 75 | 80 |
| 32 | 75 | 1200 | 75 | 100 |

The results set out in Table 6 demonstrate that the combination of prothioconazole, chlorothalonil and dimethomorph exhibited a synergistic level of activity in the control of an infestation of rape by *Peronospora arborescens.*

**Test 7: Melon - *Alternaria spp.* and *Colletotrichum spp.***

Young melon plants were sprayed with a conidium suspension of *Alternaria spp.* and *Colletotrichum spp.* and cultivated at 20°C and 100% relative atmospheric humidity for 48 hours.

The plants were divided into groups and formulations of Examples 17 to 19, 25 to 27 and 33 were used to treat the infected plants. One group of plants was kept untreated as a control group.

The treated plants were held at 15°C and 80% relative atmospheric humidity in a greenhouse for 15 days. Thereafter, the fungicidal efficacy was evaluated.

The results of the evaluation are set out in Table 7 below. 100% indicates that no fungal infestation is observed and 0% is equivalent to the efficacy of the control group.

**Table 7**

| Example No. | Application rate of prothioconazole (g/ha) | Application rate of chlorothalonil (g/ha) | Application rate of dimethomorph (g/ha) | Efficacy against *Alternaria spp.* (%) | Efficacy against *Colletotrichu m spp.* (%) |
|---|---|---|---|---|---|
| Untreated | 0 | 0 | 0 | 0 | 0 |
| 17 | 35 | 0 | 0 | 15 | 10 |
| 18 | 0 | 500 | 0 | 45 | 30 |
| 19 | 0 | 0 | 350 | 30 | 65 |
| 25 | 35 | 500 | 0 | 60 | 40 |
| 27 | 0 | 500 | 350 | 55 | 85 |
| 26 | 35 | 0 | 350 | 45 | 70 |
| 33 | 35 | 500 | 350 | 90 | 95 |

The results set out in Table 7 demonstrate that the combination of prothioconazole, chlorothalonil and dimethomorph exhibited a synergistic level of activity in the control of an infestation of melon plants by *Alternaria spp. and Colletotrichum spp.*

**Test 8: Potato - *Phytophthora infestans***

Young potato plants were sprayed with conidium suspension of *Phytophthora infestans* and cultivated at 20°C and 100% relative atmospheric humidity for 48 hours.

The plants were divided into groups and formulations of Examples 17 to 19, 28 to 30 and 34 were used to treat the infected plants. One group of plants was kept untreated as a control group.

The treated plants were held at 15°C and 80% relative atmospheric humidity in a greenhouse for 15 days. Thereafter, the fungicidal efficacy was evaluated.

The results of the evaluation are set out in Table 8 below. 100% indicates that no fungal infestation is observed and 0% is equivalent to the efficacy of the control group.

**Table 8**

| Example No. | Application rate of prothioconazole (g/ha) | Application rate of chlorothalonil (g/ha) | Application rate of dimethomorph (g/ha) | Efficacy (%) |
|---|---|---|---|---|
| Untreated | 0 | 0 | 0 | 0 |
| 17 | 47 | 0 | 0 | 15 |
| 18 | 0 | 663 | 0 | 45 |
| 19 | 0 | 0 | 132.6 | 25 |
| 29 | 47 | 663 | 0 | 60 |
| 30 | 0 | 663 | 132.6 | 70 |

(continued)

| Example No. | Application rate of prothioconazole (g/ha) | Application rate of chlorothalonil (g/ha) | Application rate of dimethomorph (g/ha) | Efficacy (%) |
|---|---|---|---|---|
| 28 | 47 | 0 | 132.6 | 40 |
| 34 | 47 | 663 | 132.6 | 100 |

The results set out in Table 8 demonstrate that the combination of prothioconazole, chlorothalonil and dimethomorph and exhibited a synergistic level of activity in the control of an infestation of potato by *Phytophthora infestans.*

**Claims**

1. A synergistic fungicidal composition, comprising:

   Component (A): prothioconazole,
   Component (B): chlorothalonil, and
   Component (C): dimethomorph.

2. The synergistic fungicidal composition of Claim 1, wherein the weight ratio of prothioconazole and chlorothalonil ranges from about 1:12 to about 1:16.

3. The synergistic fungicidal composition of Claim 1, wherein the weight ratio of prothioconazole and chlorothalonil is about 1:14.1.

4. The synergistic fungicidal composition of Claim 1, wherein the weight ratio of prothioconazole and dimethomorph ranges from about 1:1 to about 1:5.

5. The synergistic fungicidal composition of Claim 1, wherein the weight ratio of prothioconazole and dimethomorph is about 1:3.

6. The synergistic fungicidal composition of Claim 1, wherein the relative amount of chlorothalonil ranges from 5 to 25 in the weight ratio of prothioconazole, chlorothalonil and dimethomorph when the relative amount of prothioconazole is 1 and dimethomorph ranges from 0.2 to 15.

7. The synergistic fungicidal composition of Claim 1, wherein the relative amount of chlorothalonil ranges from 10 to 20 in the weight ratio of prothioconazole, chlorothalonil and dimethomorph when the relative amount of prothioconazole is 1 and the relative amount of dimethomorph ranges from 0.5 to 10.

8. The synergistic fungicidal composition of Claim 1, wherein the weight ratio of prothioconazole, chlorothalonil and dimethomorph is about 1:14.1:3.

9. The synergistic fungicidal composition of any preceding claim, wherein the amount of prothioconazole, chlorothalonil and dimethomorph in the synergistic fungicidal composition is in a range of 20% to 75% by weight;
   preferably further comprising a surfactant and/or a filler.

10. The synergistic fungicidal composition of any preceding claim, wherein the composition is provided as a formulation selected from water-soluble concentrates (SL), emulsifiable concentrates (EC), oil-in-water emulsions (EW), micro-emulsions (ME), suspension concentrates (SC), oil-based suspension concentrates (OD), flowable concentrates (FS), water-dispersible granules (WG), water-soluble granules (SG), wettable powders (WP), water soluble powders (SP), granules (GR), encapsulated granules (CG), fine granules (FG), macro-granules (GG), aqueous suspo-emulsions (SE), capsule suspensions (CS) and micro-granules (MG).

11. The synergistic fungicidal composition of any preceding claim, wherein the composition is provided as a formulation selected from water-dispersible granules (WG), aqueous suspension concentrates (SC), wettable powders (WP) and flowable concentrates (FS).

**12.** Use of the synergistic fungicidal composition in any one of claims 1 to 11 in controlling and/or eliminating undesired fungal infestations;
preferably wherein the fungal infestation being prevented, treated and/or controlled is selected from infestations of *Alternaria* spp., *Ascochyta* spp., *Botrytis cinerea, Cercospora arachidicola, Cercospora sojina, Cercospora zeae-maydis, Cochliobolus sativus, Colletotrichum* spp., *Erysiphe* spp., *Peronospora arborescens, Phakospora* spp., *Phytophthora infestans, Plasmopara viticola, Rhizoctonia solani, Sclerotinia sclerotiorum, Septoria tritici,* and *Uncinula necator.*

**13.** A method of preventing, controlling and/or treating undesired fungal infestations, comprising applying a fungicidal effective amount of the synergistic fungicidal composition of any one of claims 1 to 11;
preferably wherein the active components prothioconazole, chlorothalonil and dimethomorph are applied jointly or separately.

**14.** The method according to claim 13, wherein the fungal infestation being prevented, treated and/or controlled is selected from infestations of *Alternaria* spp., *Ascochyta* spp., *Botrytis cinerea, Cercospora arachidicola, Cercospora sojina, Cercospora zeae-maydis, Cochliobolus sativus, Colletotrichum* spp., *Erysiphe* spp., *Peronospora arborescens, Phakospora* spp., *Phytophthora infestans, Plasmopara viticola, Rhizoctonia solani, Sclerotinia sclerotiorum, Septoria tritici,* and *Uncinula necator.*

**15.** The method according to any of claims 13 to 14, wherein the application rate of prothioconazole is in the range from 10 to 300 g/ha; and/or wherein the application rate of chlorothalonil is in the range of from 100 to 2500 g/ha; and/or wherein the application rate of dimethomorph is in the range of from 1 to 2000 g/ha;
preferably wherein the application rate of prothioconazole is 47 g/ha; and wherein the application rate of chlorothalonil is 663 g/ha; and wherein the application rate of dimethomorph is 132.6 g/ha.

Europäisches Patentamt
European Patent Office
Office européen des brevets

# EUROPEAN SEARCH REPORT

Application Number
EP 19 18 1663

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | CN 102 640 748 A (GUANGXI TIANYUAN BIOCHEMISTRY) 22 August 2012 (2012-08-22)<br>* claims *<br>* abstract *<br>* paragraph [0020] *<br>* Embodiments 4-6, tests; examples *<br>----- | 1-15<br><br>1-15 | INV.<br>A01N37/34<br>A01N37/38<br>A01N43/653<br>A01P3/00 |
| X<br><br>Y | US 2016/106105 A1 (DUTZMANN STEFAN [DE] ET AL) 21 April 2016 (2016-04-21)<br>* claims *<br>* paragraph [0017] *<br>* examples; table 1 *<br>----- | 1-15<br><br>1-15 | |
| X<br><br>Y | WO 2018/210158 A1 (JIANGSU ROTAM CHEMISTRY CO LTD [CN]) 22 November 2018 (2018-11-22)<br>* claims *<br>* examples 2-5 *<br>----- | 1-15<br><br>1-15 | |
| Y | WO 2010/092119 A1 (BASF SE [DE]; WILHELM RONALD [DE] ET AL.)<br>19 August 2010 (2010-08-19)<br>* claims *<br>* claims 6, 16, 24, 54 *<br>----- | 1-15 | TECHNICAL FIELDS SEARCHED (IPC)<br>A01N |
| A | EP 0 783 836 A1 (AGROGENE LTD [IL]; C T S LTD [IL]) 16 July 1997 (1997-07-16)<br>* the whole document *<br>----- | 1-15 | |

The present search report has been drawn up for all claims

1

| Place of search | Date of completion of the search | Examiner |
|---|---|---|
| Munich | 12 July 2019 | Galley, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 18 1663

This annex lists the patent family members relating to the patent documents cited in the above-mentioned European search report. The members are as contained in the European Patent Office EDP file on The European Patent Office is in no way liable for these particulars which are merely given for the purpose of information.

12-07-2019

| Patent document cited in search report | Publication date | Patent family member(s) | Publication date |
|---|---|---|---|
| CN 102640748 A | 22-08-2012 | NONE | |
| US 2016106105 A1 | 21-04-2016 | AT 214230 T | 15-03-2002 |
| | | AU 727186 B2 | 07-12-2000 |
| | | BR 9809100 A | 01-08-2000 |
| | | CA 2286772 A1 | 29-10-1998 |
| | | CA 2600538 A1 | 29-10-1998 |
| | | CA 2721222 A1 | 29-10-1998 |
| | | CA 2800471 A1 | 29-10-1998 |
| | | CA 2846948 A1 | 29-10-1998 |
| | | CA 2905473 A1 | 29-10-1998 |
| | | CA 2944940 A1 | 29-10-1998 |
| | | CN 1252690 A | 10-05-2000 |
| | | CZ 296701 B6 | 17-05-2006 |
| | | DE 19716257 A1 | 22-10-1998 |
| | | DE 59803337 D1 | 18-04-2002 |
| | | DE 122008000040 I2 | 06-11-2008 |
| | | DK 0975219 T3 | 01-07-2002 |
| | | EA 199900916 A1 | 24-04-2000 |
| | | EE 9900500 A | 15-06-2000 |
| | | EP 0975219 A1 | 02-02-2000 |
| | | ES 2172143 T3 | 16-09-2002 |
| | | HK 1026822 A1 | 27-02-2004 |
| | | HU 0001682 A2 | 28-09-2000 |
| | | ID 22820 A | 09-12-1999 |
| | | IL 131900 A | 25-07-2004 |
| | | JP 4094067 B2 | 04-06-2008 |
| | | JP 2001520665 A | 30-10-2001 |
| | | KR 20010006063 A | 15-01-2001 |
| | | NL 350024 I1 | 01-03-2006 |
| | | NL 350031 I1 | 01-02-2007 |
| | | NZ 500367 A | 29-09-2000 |
| | | PL 336226 A1 | 19-06-2000 |
| | | PT 975219 E | 30-09-2002 |
| | | SI 0975219 T1 | 31-10-2002 |
| | | SK 143599 A3 | 12-06-2000 |
| | | TR 199902400 T2 | 21-01-2000 |
| | | TW 505504 B | 11-10-2002 |
| | | US 6306850 B1 | 23-10-2001 |
| | | US 2002173529 A1 | 21-11-2002 |
| | | US 2009306109 A1 | 10-12-2009 |
| | | US 2013190371 A1 | 25-07-2013 |
| | | US 2013296389 A1 | 07-11-2013 |
| | | US 2014066407 A1 | 06-03-2014 |
| | | US 2014364469 A1 | 11-12-2014 |
| | | US 2016106105 A1 | 21-04-2016 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 19 18 1663

This annex lists the patent family members relating to the patent documents cited in the above-mentioned European search report. The members are as contained in the European Patent Office EDP file on
The European Patent Office is in no way liable for these particulars which are merely given for the purpose of information.

12-07-2019

| Patent document cited in search report | Publication date | Patent family member(s) | Publication date |
|---|---|---|---|
| | | WO 9847367 A1 | 29-10-1998 |
| | | ZA 9803236 B | 22-10-1998 |
| WO 2018210158 A1 | 22-11-2018 | EP 3403504 A1 | 21-11-2018 |
| | | WO 2018210158 A1 | 22-11-2018 |
| WO 2010092119 A1 | 19-08-2010 | AR 075573 A1 | 20-04-2011 |
| | | AU 2010212861 A1 | 01-09-2011 |
| | | BR PI1008838 A2 | 25-08-2015 |
| | | CA 2750320 A1 | 19-08-2010 |
| | | CL 2011001963 A1 | 20-01-2012 |
| | | CN 102316729 A | 11-01-2012 |
| | | EA 201101185 A1 | 30-03-2012 |
| | | EP 2395833 A1 | 21-12-2011 |
| | | TW 201032721 A | 16-09-2010 |
| | | UA 104451 C2 | 10-02-2014 |
| | | US 2012010072 A1 | 12-01-2012 |
| | | UY 32438 A | 31-08-2010 |
| | | WO 2010092119 A1 | 19-08-2010 |
| EP 0783836 A1 | 16-07-1997 | AR 005395 A1 | 28-04-1999 |
| | | AU 723139 B2 | 17-08-2000 |
| | | BR 9700029 A | 17-11-1998 |
| | | CA 2191930 A1 | 12-07-1997 |
| | | DE 69704220 D1 | 19-04-2001 |
| | | DE 69704220 T2 | 19-07-2001 |
| | | EA 199700001 A1 | 30-09-1997 |
| | | EP 0783836 A1 | 16-07-1997 |
| | | ES 2155980 T3 | 01-06-2001 |
| | | GR 3035584 T3 | 29-06-2001 |
| | | IL 118930 A | 31-10-2003 |
| | | JP H09291004 A | 11-11-1997 |
| | | US 5633254 A | 27-05-1997 |
| | | ZA 9700211 B | 29-07-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **S.R. COLBY.** Calculating Synergistic and Antagonistic Responses of Fungicide Combinations. *Weeds,* 1967, vol. 15, 20-22